# EUROPEAN PATENT SPECIFICATION

(11) **EP 2 592 944 B1**
(45) Date of publication and mention of the grant of the patent: **25.12.2019**
(21) Application number: 11810233.4
(22) Date of filing: 18.07.2011
(51) Int. Cl.: A23J 1/20, A23J 3/08

(54) **HIGH-PROTEIN BEVERAGES COMPRISING WHEY PROTEIN**
GETRÄNKE MIT HOHEM PROTEINGEHALT UND MOLKEPROTEINEN
BOISSONS À HAUTE TENEUR EN PROTÉINES COMPRENANT DES PROTÉINES DE LACTOSÉRUM

(30) Priority: 18.07.2010 US 365350 P
(43) Date of publication of application: 22.05.2013
(73) Proprietor: Glanbia Nutritionals (Ireland) Ltd., Kilkenny (IE)
(72) Inventor: WARD, Loren, Twin Falls Idaho 83301 (US); CAHALANE, Grace, Idaho 83301 (US)
(74) Representative: Dehns
(86) International application number: PCT/US2011/044406
(87) International publication number: WO 2012/012351

(56) References cited:
- WO-A2-2007/106731
- WO-A2-2009/112036
- US-A1- 2004 156 969
- US-A1- 2007 160 712
- US-A1- 2007 160 712
- US-A1- 2008 254 505
- US-A1- 2008 254 505

## Description

This application claims the benefit of priority of United States Provisional Patent Application Number 61/365,350, filed July 18, 2010.

### Field of the Invention

The invention relates to compositions comprising protein beverages and methods for formulating such beverages. More specifically, the invention relates to beverages comprising whey protein and methods for formulating them.

### Background of the Invention

Protein is a necessary part of the diet. Proteins are useful for building muscle, for forming hormones and enzymes, and for providing scaffolding within and between cells. They also provide an energy source, as well as the amino acids useful for general cell growth and repair. Some individuals have a greater need for protein in their diets, such as individuals who are at risk of losing muscle mass through strenuous activities, weight loss, or injury (such as burns, for example), children who need protein to aid in growth, and elderly individuals who may lose muscle mass during the aging process.

Certain sources provide higher quality proteins, particularly in terms of their quantity of the essential amino acids (isoleucine, leucine, lysine, methionine, phenylalanine, threonine, tryptophan, valine, histidine, tyrosine). Of the essential amino acids, the branched-chain amino acids (isoleucine, leucine, valine) have been shown to be especially important for purposes as diverse as increasing muscle mass, improving glucose control, and improving cognitive function.

Because beverages may provide a variety of nutrients in an easy-to-administer form, efforts have been made to add protein of various kinds to beverages to increase their nutritional value. For example, U.S. Patent Number 3,843,802 (Puski, October 22, 1974) describes a process for treating soybean protein, sodium caseinate, wheat gluten, fish protein concentrate, or microbial protein to produce an acid-soluble product for incorporation into beverages such as carbonated and non-carbonated soft drinks. Magnino et al. (U.S. Patent Number 3,645,745, February 29, 1972) describe a method for preparing oleaginous seed protein for incorporation into liquid formulations by altering the physical structure of the protein molecules by subjecting them to strongly acidic or basic conditions. Pour-el and Swenson (U.S. Patent Number 3,713,843, January 30, 1973) describe methods for digesting dispersed insoluble plant proteins with acid active enzymes under quiescent acidic conditions to completely dissolve the insoluble colloidal protein, producing a freeze-dried soluble proteinaceous powder for incorporation into carbonated or non-carbonated acidic beverages. US 2008/0254505 describes a method of producing whey protein hydrolysate using a microbial endopeptidase which specifically cleaves on the carboxy terminal side of arginine or lysine.

Whey protein is an ideal protein for incorporation into foods and beverages because of its many beneficial components and effects. For example, whey protein contains all the essential amino acids, and is an excellent source of branched-chain amino acids, especially leucine. Dietary intake of whey protein has been shown to increase levels of glutathione, improve bone health, improve cognitive performance, and have other beneficial effects in areas such as prevention/therapy of cancer, prevention of heart disease, and prevention/therapy of virus-induced illnesses.

According to the U.S. Dairy Export Council, "[t]he application of whey proteins to dry mix beverage formulations is common, but the creation of ready-to-drink beverages requires far more technology" (Rittmanic, S., "U.S. Whey Proteins in Ready-to-Drink Beverages," U.S. Dairy Export Council Applications Monograph, USDEC, Arlington, Virginia, 2006, p. 1). One problem, for example, is that whey proteins may be soluble over a wide pH range, but they also gel quite easily, depending upon the temperature and concentration of the product. Solubility of whey proteins is especially low at about pH 4.5-5.5, which is the isoelectric point for the proteins. Therefore, in acidic beverages, precipitation may occur during mixing as the pH transitions from pH 6 or 7 (the usual pH of whey proteins) through the isoelectric point to the lower pH of an acidic environment. High temperature treatment of protein drinks for pasteurization may also negatively affect whey protein solubility and cause gelation issues.

Methods for providing whey proteins as liquid formulations often include the use of stabilizing agents, which stabilize proteins as a suspension in an aqueous acidic environment. Pectin has been used to stabilize proteins in suspension, as has collagen. Ingredient panels for many compositions indicate that they have high levels of protein and that they incorporate whey proteins and/or whey protein isolate, but most actually contain significant levels of protein in the form of stabilizers, such as collagen, pectin and/or albumin. Table 1 lists the protein content of several commercially-available protein drinks and the source of that protein.

**Table 1**

| **Product #** | **% Protein** | **Protein Source** |
|---|---|---|
| 1 | 6.81 | Whey (Milk) Protein Isolate |
| 2 | 6.77 | Ion Exchange Whey (Milk) Protein Isolate |
| 3 | 6.77 | Ion Exchange Whey (Milk) Protein Isolate |
| 4 | 5.56 | Whey Protein Isolate |
| 5 | 6.77 | Whey Protein Isolate |
| 6 | 7.00 | MRI Proprietary Whey Blend (Hydrolyzed Cross Miro-Filtered Whey Protein Isolate, Concentrated Whey Protein, Whey Protein Isolate), |
| 7 | 3.08 | Calcium, And Sodium Caseinate, Milk Protein Isolate, |
| 8 | 5.15 | Protein Blend (Soy Protein Isolate, Whey Protein Concentrate, And Calcium Caseinate) |
| 9 | 6.04 | Blend Of Spray Dried Untrafiltered Milk Protein Isolate, Yielding Fast Acting Whey Protein Peptides, Branched Chain Amino Acids, L-Glutamine Peptides, And Slow Acting Casein Peptides, Whey Protein Concentrate, Calcium Caseinate |
| 10 | 6.80 | Micellar Alpha And Beta Caseins And Caseinates, Whey Concentrates, Whey Peptides, L-Glutamine, Taurine |
| 11 | 7.00 | Protein Blend (Milk Protein Concentrate, Milk Protein Isolate, Calcium Caseinate, Whey Protein Isolate) |
| 12 | 7.73 | Milk Protein Concentrate, Whey Protein Concentrate, Calcium Caseinate |
| 13 | 7.58 | Milk Protein Concentrate, Calcium Caseinate, Whey Protein Isolate |
| 14 | 7.95 | Calcium Caseinate, Milk Protein Isolate, Whey Protein Concentrate, Micellar Casein, Whey Protein Isolate, Casein Hydrolysate, Di, And Tri-Peptides, Whey Protein Hydrolysate Di And Tri-Peptides |
| 15 | 8.00 | Protein & Amino Acid Matrix Comprised Of (Milk Protein Concentrate [Milk], Whey Protein Concentrate [Milk], Calcium Caseinate [Milk], Milk Protein Isolate [Milk], Whey Protein Isolate [Milk], Micellar Casein [Milk], Egg Albumin [Egg], Glutamine Peptides [Wheat]), |
| 16 | 11.95 | Whey Protein Isolate, Hydrolyzed Gelatin, |
| 17 | 25.00 | Complete Protein Matrix (DS Proprietary Blend Of Collagen Protein Isolate, Whey Protein Isolate, Casein Protein Isolate) |
| 18 | 31.40 | Enzymatically Hydrolyzed Collagen, Enzymatically Hydrolyzed Whey Protein Isolate, Enzymatically Hydrolyzed Casein |
| 19 | 34.88 | Protein Blend Enzymatically Hydrolyzed (Predigested) Collagenic Protein Isolate, Whey Protein Isolate And Casein Protein Isolate |
| 20 | 42.00 | Complete Protein Matrix (DS Proprietary Blend Of Collagen Protein Isolate, Whey Protein Isolate, Casein Protein Isolate) |
| 21 | 42.00 | Blend Of Enzymatically Hydrolyzed (Predigested) Collagenic Protein Isolate, Whey Protein Isolate, Casein Protein Isolate |
| 22 | 50.73 | Protein Blend [Enzymatically Hydrolyzed (Predigested) Collagenic Protein Isolate, Whey Protein Isolate And Casein Protein Isolate] |
| 23 | 50.00 | Hydrolyzed Kosher Collagen Protein |

Given the benefits provided by whey protein, however, it would be beneficial to be able to provide a liquid product comprising whey protein at levels higher than the current "high" levels of less than about 7 percent.

### Summary of the Invention

The invention relates to compositions comprising at least about 7.5% whey protein in aqueous solution. Various aspects of the invention also relate to compositions comprising at least about 10% whey protein in an aqueous solution. At least about 0.1 percent of the whey protein in such compositions may be intact protein.

The invention also relates, in various aspects, to a method for increasing the amount of protein that may be incorporated into an aqueous solution, the method comprising admixing intact protein with an amount of peptides effective to increase the total amount of protein incorporation in the aqueous solution. In various aspects of the method, the admixing of intact protein with peptides may be effective to increase the amount of protein in the solution to at least about 10%, at least about 20%, at least about 30%, at least about 40%, etc.

**Table 1, Continued**

| | | |
|---|---|---|
| 18 | 31.40 | Enzymatically Hydrolyzed Collagen, Enzymatically Hydrolyzed Whey Protein Isolate, Enzymatically Hydrolyzed Casein |
| 19 | 34.88 | Protein Blend Enzymatically Hydrolyzed (Predigested) Collagenic Protein Isolate, Whey Protein Isolate And Casein Protein Isolate |
| 20 | 42.00 | Complete Protein Matrix (DS Proprietary Blend Of Collagen Protein Isolate, Whey Protein Isolate, Casein Protein Isolate) |
| 21 | 42.00 | Blend Of Enzymatically Hydrolyzed (Predigested) Collagenic Protein Isolate, Whey Protein Isolate, Casein Protein Isolate |
| 22 | 50.73 | Protein Blend [Enzymatically Hydrolyzed (Predigested) Collagenic Protein Isolate, Whey Protein Isolate And Casein Protein Isolate] |
| 23 | 50.00 | Hydrolyzed Kosher Collagen Protein |

Given the benefits provided by whey protein, however, it would be beneficial to be able to provide a liquid product comprising whey protein at levels higher than the current "high" levels of less than about 7 percent.

### Summary of the Invention

The invention relates to compositions comprising at least 20% whey protein in aqueous solution. At least 0.5% percent of the whey protein in such compositions is intact protein.

The disclosure also relates, in various aspects, to a method for increasing the amount of protein that may be incorporated into an aqueous solution, the method comprising admixing intact protein with an amount of peptides effective to increase the total amount of protein incorporation in the aqueous solution. In various aspects of the method, the admixing of intact protein with peptides may be effective to increase the amount of protein in the solution to at least about 10%, at least about 20%, at least about 30%, at least about 40%, etc.
This method may be effective for producing high-protein aqueous solutions at various pH levels, including neutral pH.

The invention also relates to a method for formulating compositions comprising at least about 20% whey protein in aqueous solution, wherein at least 0.5% of the whey protein is intact protein, the method comprising the steps of combining intact whey protein with peptides to form a whey protein/peptides combination, admixing the protein/peptides combination and water to form a protein/peptides/water mixture, and adding to the mixture an effective amount of acid to increase the solubility of the protein/peptides in the water to produce an aqueous solution of protein/peptides. In various aspects, the aqueous solution may be from pH 2.0 to pH 4.0 and may comprise one or more acids chosen from the group consisting of phosphoric acid, citric acid, tartaric acid, lactic acid, hydrochloric acid, ascorbic acid, malic acid, acetic acid, benzoic acid, fumaric acid, succinic acid, sulfuric acid, gluconic acid, carbonic acid, and combinations thereof.

### Brief Description of the Drawings

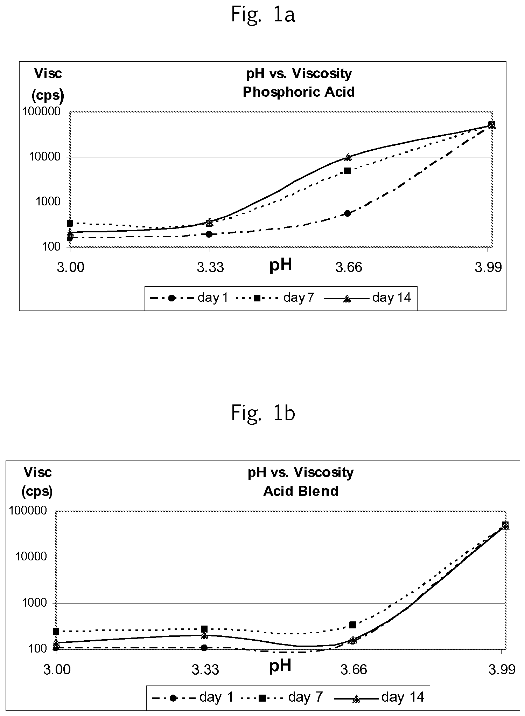

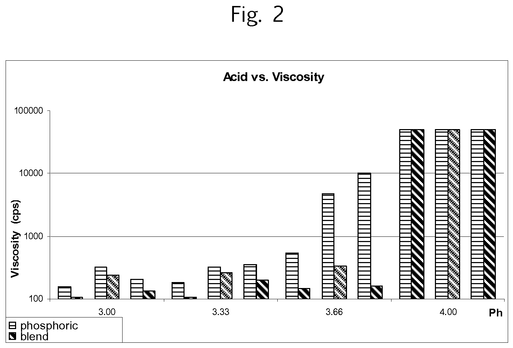

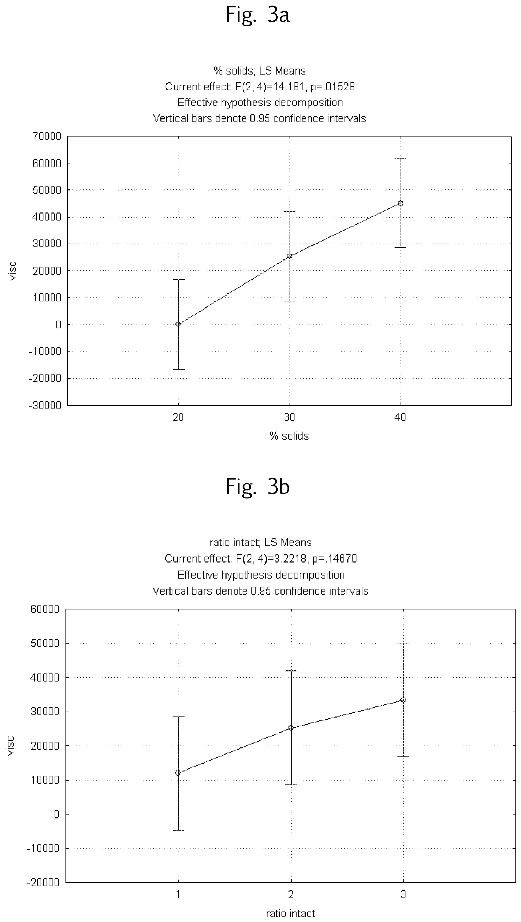

Fig. 1a and Fig. 1b are graphs illustrating the viscosity in the indicated pH ranges for phosphoric acid (Fig. 1a) and the acid blend of the invention (Fig. 1b). Thirty percent protein was provided entirely as peptides for this formulation. Viscosity (in Centipoise, cps) is indicated on the y-axis and pH is indicated on the x-axis.

### Detailed Description

The inventors have discovered a method for increasing the amount of whey protein that may be solubilized in an aqueous solution, and have produced high-protein liquid beverages and gel compositions using the method. The disclosure relates, in various aspects, to a method for increasing the amount of protein that may be incorporated into an aqueous solution, the method comprising admixing intact protein with an amount of peptides effective to increase the total amount of protein incorporation in the aqueous solution. In various aspects of the method, the admixing of intact protein with peptides may be effective to increase the amount of whey protein in a solution to at least about 10%, at least about 20%, at least about 30%, at least about 40%, etc. It is well within the level of skill in the art to determine the amount of peptides effective to increase the total amount of protein incorporation, given the information provided by the inventors in the present disclosure.

The method comprises admixing intact whey protein with peptides to produce a protein/peptide mix, admixing the protein/peptide mix with water to provide a protein/peptide/water mixture, and adding to the mixture an amount of acid effective to solubilize the protein/peptide mix in the water to form an aqueous protein/peptide solution. The inventors have also developed compositions prepared by the method, such compositions comprising at least about 20 percent whey protein in an acidic or neutral aqueous solution, the whey protein/peptide mix comprising from about 0.5 to about 36 percent intact whey protein. The inventors have demonstrated, by producing compositions using the method of their invention, that protein beverages may be manufactured to contain at least about 20%, at least about 30%, at least about 40%, etc., protein in the form of peptides or an intact protein/peptide mix. "Aqueous," as used herein, may include, but not be limited to, liquids and gels. In this disclosure, "whey protein" is used to describe a composition that comprises intact protein, segments of intact protein (i.e., peptides), or a combination of both.

Proteins are generally less soluble at their isoelectric points. Whey proteins comprise a variety of proteins, some having isoelectric points near the pH range that may be desirable for liquid drink formulations. At the isoelectric point, lack of a net charge promotes interactions between protein molecules, rather than between protein and water molecules, increasing the occurrence of protein aggregation and precipitation. It has therefore previously been difficult to incorporate significant amounts of whey protein into liquid formulations, particularly liquid drink formulations, and levels of about 7% whey protein have been considered "high." Very often, compositions that appear to provide more whey protein actually provide a significant amount of protein- but that protein is a mix that contains only a fraction of the protein from whey. The present invention provides compositions in which essentially 100 percent of the protein in the composition may comprise whey protein, although compositions which contain insignificant amounts of other types of proteins are contemplated within the scope of the invention. Whey protein is defined as intact protein derived from whey (including, for example, biologically active proteins such as lactoferrin) and peptides derived from such intact whey proteins. Compositions made according to the method of the invention do not require the use of matrix proteins of lesser nutritional value, such as collagen. Whey protein may be derived from milk proteins and may be provided as whey protein isolate, whey protein concentrate, hydrolyzed whey protein, or other sources and/or products known to those of skill in the art. Peptides derived from intact whey proteins may be derived by a variety of methods known to those of skill in the art, such as hydrolysis of whey proteins. Whey protein hydrolysates may be produced by methods known to those of skill in the art, such methods including, for example, the enzymatic or acid hydrolysis of whey proteins.

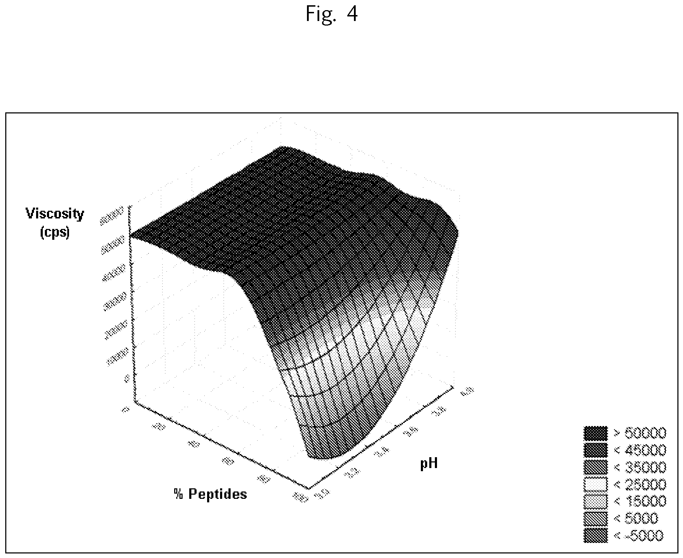

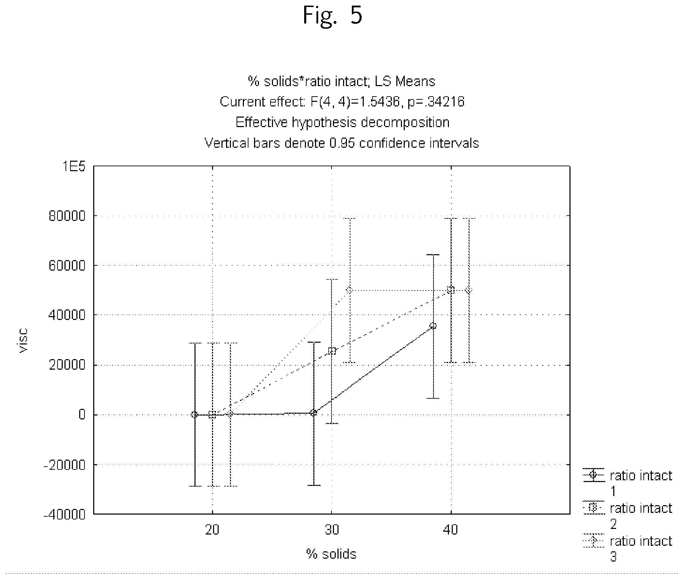

Because various methods for hydrolyzing whey proteins may produce products in which some residual intact protein remains, as well as some free amino acids. "Whey peptides" may therefore contain a combination of intact protein and fragments of intact protein (*i.e.,* peptides), as well as limited amounts of free amino acids, the composition of the whey peptide composition depending on the process used to make it and the degree of hydrolysis achieved. Whey peptides, as used herein, may therefore include compositions comprising mixtures of proteins and peptides, as well as compositions in which all the detectable protein content is present in the form of protein fragments, or peptides. It should be noted, however, that as the overall percentage of protein in a beverage composition increases, the percentage of protein that may be incorporated into the composition as intact protein decreases (see Fig. 4).

As used herein, the percentage of protein is defined as the number of grams of protein per 100 ml of aqueous solution, expressed as a percentage. To those of skill in the art, "intact protein" is usually understood to mean protein that is non-hydrolyzed. "Peptides" are defined herein as fragments of intact proteins having amino acid sequences comprising less than the entire amino acid sequence of an intact protein. Synthesized peptides may be used, but peptides produced by hydrolyzing protein are generally a more cost-effective option. Peptides from whey protein are preferred for the compositions and methods of the invention, because whey protein is a better source of desirable amino acids and is a readily digested protein providing the highest levels of branched chain amino acids of any known protein source. "Peptide," as used herein, is generally used to denote a mixture of multiple peptides. Therefore, "peptide" and "peptides" may be used interchangeably.

Where a composition or method "comprises" or is considered to be "comprising" certain steps or elements of a composition, it is to be understood that that such a composition or method may also "consist of" or "consist essentially of" those elements or steps.

Acids are often added to beverages in order to impart flavors to those beverages. For example, phosphoric acid is a staple in many cola drinks. Citric acid is added to many beverages having a "fruity" flavor. Malic acid, found in apples, may be added when a different type of fruity flavor is desired. Scientists at Glanbia Nutritionals have also found that adding one or more food-grade acids to whey protein before the protein is dried (*i.e.,* co-drying the protein with the acid) yields a better-tasting whey protein. Whey protein has been incorporated into drinks containing various acids, such as phosphoric acid, citric acid, and malic acid, but it has been difficult to provide high levels of whey protein, usually provided as whey protein isolate, because it is difficult to incorporate without experiencing solubility and gelation problems when added at concentrations higher than about 7%. Even at these levels, it is often necessary to incorporate stabilizers such as collagen and/or albumin, proteins generally considered to be of lesser quality than whey protein. However, the inventors have discovered that if certain acids are admixed in appropriate ratios, the acid blend can further increase the amount of protein that may be incorporated into a liquid formulation such as a protein drink. This can be done without the use of stabilizers, so that the protein incorporated into the liquid formulation is 100% protein, peptides, and/or amino acids derived from whey. Protein gelation may be increased under certain circumstances in the presence of phosphoric acid, an acid commonly used in acidic drink formulations. It is believed that the phosphate group of phosphoric acid forms bonds with certain residues of proteins (*i.e.,* lysine, histidine, arginine) and may also, under certain conditions, form bonds with available carboxyl groups of amino acids. Without being bound by theory, the inventors believe that admixing whey peptides with intact whey proteins helps to overcome some of the interactions which cause increased protein gelation while providing the advantage of incorporating into the finished product an extra amount of bioavailable amino acids, in the form of peptides, from the same excellent protein source as that from which the intact protein was derived. Furthermore, adding the step of admixing phosphoric acid, for example, with one, or a mix of more than one, other acid(s) such as citric acid, malic acid, tartaric acid, lactic acid, hydrochloric acid, ascorbic acid, acetic acid, benzoic acid, fumaric acid, succinic acid, sulfuric acid, gluconic acid, carbonic acid, further increases the amount of intact protein that may be incorporated into an aqueous solution.

Whereas currently marketed protein drinks are advertised as high- protein with a level of less than about 7 percent whey protein isolate (i.e., 40 grams of protein in a 591 ml bottle), the composition of the invention is preferably a beverage comprising about 100% of its protein derived from whey, provided, for example, as whey protein concentrate, whey protein isolate, etc., and whey-derived peptides (which may be synthesized, but may more economically be obtained from whey protein which has been hydrolyzed to produce whey peptides). Compositions of the invention may therefore provide, for example, from at least about 20 protein (as peptides and/or intact protein) in an aqueous solution, with from about 0.5 to about 36 percent of that protein being provided as intact protein.

As the total protein content increases, the percentage of intact protein that forms part of the total protein content will generally decrease. For example, in a 40% protein beverage between 0.5-23% of that protein may be intact protein, with the remainder being peptides; in a 30% protein beverage between 0.5-35% of that protein can be intact, with the remainder being peptides; in a 20% protein beverage more than 36% can be incorporated as intact protein. Furthermore, the use of the acid blend, instead of solely phosphoric acid, also allows for more intact protein to incorporated at acidic pH. Studies have demonstrated that amino acids provided in peptide form, and even more preferably in the form of intact protein, may provide a greater nutritional benefit than amino acids provided in their free form (Trocki, O. et al., "Intact Protein Versus Free Amino Acids in the Nutritional Support of Thermally Injured Animals," Journal of Parenteral and Enteral Nutrition (1986), Vol. 10, No 2, 139-145). The present invention therefore provides compositions, and methods for producing those compositions that may therefore provide a significantly greater nutritional benefit than do formulations of free amino acids or formulations of intact protein in combination with matrix proteins of lesser nutritional value, such as collagen.

An acid blend for use in the method of the invention may be produced, for example, by heating water to 60 degrees Celsius, adding malic acid and citric acid while stirring, and allowing the mixture to remain at 60°C until the acids are dissolved. The acid solution is then cooled to room temperature, and liquid phosphoric acid (75%) is thoroughly admixed with the malic/citric acid solution.

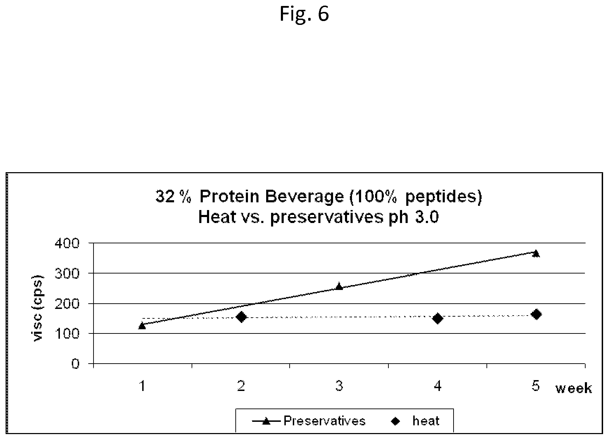

By way of example, to make a high-protein beverage (i.e., at least about 20 percent whey protein) of the invention, room temperature water is weighed into a container. Protein, provided as a combination of intact whey protein and whey-derived peptides ("whey peptides"), is added while stirring, care being taken not to produce foam during the stirring/adding. If preservatives are desired, they may be added once all protein is hydrated. Compositions of the invention may be treated with preservatives, but they may also be heat-treated. It should be noted that heat treatment may extend the shelf life of the product by reducing viscosity (see Fig. 6). Next, the protein solution is titrated to the desired pH with the acid. The liquid formulation thus produced may then be packaged into bottles or other containers and stored at room temperature.

Aspects of the invention also relate to a method for solubilizing higher quantities of protein into a liquid formulation, the method comprising admixing a whey protein/peptide mix with water to form a protein/peptide/water mixture and adding to the protein/peptide/water mixture an acid composition comprising one or more acids chosen from the group consisting of, for example, phosphoric acid, citric acid, tartaric acid, lactic acid, hydrochloric acid, ascorbic acid, malic acid, acetic acid, benzoic acid, fumaric acid, succinic acid, sulfuric acid, gluconic acid, carbonic acid, and combinations thereof.

Compositions of the invention may comprise carbonated drinks, fruit juice-flavored drinks, protein waters containing various flavors, and various other types of beverages. Compositions may be provided as liquid formulations containing protein or as composite parts of these formulations (*i.e.,* protein and acid blend) so that the formulator may admix the desired amount of protein into the liquid formulation. Compositions may also comprise flavorings, vitamins, minerals, and/or other additives which may be desired by a consumer. Product viscosities and textures may also be varied by adding hydrocolloids (*e*.*g*., starches, pectins, carrageenan), and/or other thickening/texturizing ingredients. For example, the inventors have formulated a neutral pH gel using carrageenan (Lactarin MV406) as a thickening agent and adding flavors and sugar.

Compositions of the invention are suitable for use by athletes desiring high-protein beverages for consumption before, during, and after strenuous activities. Compositions of the invention may also be desirable as a part of a weight-loss regimen, providing necessary nutrients without added calories, or may be provided to those in need of added protein to combat muscle loss due to disease, injury, or aging. Compositions of the invention may also comprise medical foods into which specific ingredients are incorporated to meet the needs of a population of individuals having specific nutritional needs.

The invention may be further described by means of the following non-limiting examples.

### Examples

### Acid Blend

Water (150g) was heated to 60°C. Malic acid (175g; Bartek Ingredients, Inc.) and 175g citric acid (Tate & Lyle Anhydrous Citric Acid) were added to the water while stirring. Heating and stirring continued at 60°C until acids were dissolved. The acid solution was allowed to cool to room temperature. Aqueous phosphoric acid (500 ml; Hydrite Chemical Company 75% Phosphoric Acid FCC) was then added to the malic/citric acid and thoroughly mixed.

### 40% protein beverage with 100% peptides

468g water (room temperature) was weighed into a beaker. A stir bar was placed in the beaker, placed on a stir plate (Thermo Scientific Cimarec® Stir Plate), and set to stir at low speed (*e*.*g* setting #4). Whey-derived peptides (400g) were added into vortex, taking care not to create foam. Once all protein was hydrated, 1g of sodium benzoate (Genovique) and 1g of potassium sorbate (Haarmann and Reimer Corp.) were added to the protein solution. The protein solution was titrated to pH 3.0 with 130g of the acid blend, then packaged into bottles and stored at room temperature.

### 20% protein beverage with 36% intact protein and 64% peptides

Water (728g, room temperature) was weighed into a beaker. A dry blend was made of 128g of whey-derived peptides and 72g of intact protein. With slow stirring, the protein/peptide mixture was added to the water (into vortex), taking care not to create a foam while mixing. Once all protein was hydrated, 1g of sodium benzoate and 1 g of potassium sorbate were added to the protein solution. The protein solution was titrated to pH 3.0 with 70g acid blend formulated as described above, then the beverage was packaged into bottles and stored at room temperature.

### Neutral pH Beverage

780g water (room temperature) was weighed into a beaker. A stir bar was placed in the beaker and set to stir at low speed. Whey-derived peptides (320g) were added into the vortex, taking care not to create foam. Once all protein was hydrated, the beverage was processed through a Microthermics tube and shell heat exchanger (electric model 25HV hybrid). The product was UHT processed to 290°F and filled into aseptic bottles in a Microthermics clean fill hood.

### Neutral pH Gel

686g water (room temperature) was weighed into a beaker. A stir bar was placed in the beaker and see to stir at low speed. Whey-derived peptides (224g) were added into the vortex, taking care not to create foam. 10g of Lactarin MV406 was dry-blended with 7.5g of Key Essentials WFF Chocolate powder and 40g sugar. The dry blend was slowly added into the vortex. Once all ingredients were hydrated, the beverage was processed through a Microthermics tube and shell heat exchanger (electric model 25HV hybrid). The product was UHT processed to 290°F and filled into asptic bottles in a Microthermics clean fill hood.

## Claims

1. An aqueous solution comprising at least 20 percent whey protein, wherein at least 0.5 percent of the whey protein is intact protein.

2. The aqueous solution of claim 1 wherein the whey protein is intact protein and/or whey peptides.

3. The aqueous solution of claim 1 or claim 2 wherein the whey protein is chosen from the group consisting of whey protein isolate, whey protein concentrate, whey protein hydrolysate, and combinations thereof.

4. The aqueous solution of any one of the preceding claims wherein said solution is from pH 2.0 to pH 4.0 and comprises one or more acids selected from the group consisting of phosphoric acid, citric acid, tartaric acid, lactic acid, hydrochloric acid, ascorbic acid, malic acid, acetic acid, benzoic acid, fumaric acid, succinic acid, sulfuric acid, gluconic acid, carbonic acid, and combinations thereof.

5. A method for formulating an aqueous solution comprising at least 20% whey protein, wherein at least 0.5 percent of the whey protein is intact protein, the method comprising the steps of
(a) combining intact whey protein with peptides to form a whey protein/peptide mixture;
(b) admixing the protein/peptide mixture with water to form a protein/peptide/water mixture; and
(c) adding to the protein/peptide/water mixture an amount of acid effective to increase the solubility of the protein/peptide mixture in the water to produce an aqueous protein/peptide solution.

6. The method of claim 5 wherein the whey protein is chosen from the group consisting of whey protein isolate, whey protein concentrate, whey protein hydrolysate, and combinations thereof.

7. The method of claim 5 wherein said acid is produced by admixing phosphoric acid with one or more acids selected from citric acid, malic acid, tartaric acid, lactic acid, hydrochloric acid, ascorbic acid, acetic acid, benzoic acid, fumaric acid, succinic acid, sulfuric acid, gluconic acid, carbonic acid and combinations thereof.

8. The method of claim 5 wherein the acid is an admixture of malic, citric, and phosphoric acid.

9. A method for increasing the solubility of whey protein in an aqueous solution, the method comprising admixing at least 0.5% intact whey protein with an amount of whey peptides effective to increase the total amount of protein incorporated into the aqueous solution to at least 20 percent.

10. The method of claim 9 further comprising the steps of
(a) admixing water, malic and citric acid;
(b) adding phosphoric acid to form an aqueous solution comprising malic acid, citric acid, and phosphoric acid, and
(c) admixing the aqueous solution comprising malic acid, citric acid, and phosphoric acid with the aqueous whey protein solution.

## Patentansprüche

1. Wässrige Lösung, umfassend mindestens 20 Prozent Molkeprotein, wobei mindestens 0,5 Prozent des Molkeproteins intaktes Protein ist.

2. Wässrige Lösung nach Anspruch 1, wobei das Molkeprotein intaktes Protein und/oder Molkepeptide ist.

3. Wässrige Lösung nach Anspruch 1 oder Anspruch 2, wobei das Molkeprotein aus der Gruppe, bestehend aus Molkeproteinisolat, Molkeproteinkonzentrat, Molkeproteinhydrolysat und Kombinationen davon, ausgewählt ist.

4. Wässrige Lösung nach einem der vorstehenden Ansprüche, wobei die Lösung von pH 2,0 bis pH 4,0 ist und eine oder mehrere Säuren umfasst, die ausgewählt sind aus der Gruppe, bestehend aus Phosphorsäure, Zitronensäure, Weinsäure, Milchsäure, Salzsäure, Ascorbinsäure, Apfelsäure, Essigsäure, Benzoesäure, Fumarsäure, Bernsteinsäure, Schwefelsäure, Glukonsäure, Kohlensäure und Kombinationen davon.

5. Verfahren zum Formulieren einer wässrigen Lösung, umfassend mindestens 20% Molkeprotein, wobei mindestens 0,5 Prozent des Molkeproteins intaktes Protein ist, wobei das Verfahren die folgenden Schritte umfasst
(a) Kombinieren von intaktem Molkeprotein mit Peptiden, um eine Molkeprotein/Peptid-Mischung zu bilden;
(b) Mischen der Molkeprotein/Peptid-Mischung mit Wasser, um eine Protein/Peptid/Wasser-Mischung zu bilden; und
(c) Zugeben, zu der Protein/Peptid/Wasser-Mischung, einer Menge von Säure, die wirksam ist, um die Löslichkeit der Protein/Peptid-Mischung in dem Wasser zu erhöhen, um eine wässrige Protein/Peptid-Lösung zu erzeugen.

6. Verfahren nach Anspruch 5, wobei das Molkeprotein aus der Gruppe, bestehend aus Molkeproteinisolat, Molkeproteinkonzentrat, Molkeproteinhydrolysat und Kombinationen davon, ausgewählt ist.

7. Verfahren nach Anspruch 5, wobei die Säure durch Mischen von Phosphorsäure mit einer oder mehreren Säuren, ausgewählt aus Zitronensäure, Apfelsäure, Weinsäure, Milchsäure, Salzsäure, Ascorbinsäure, Essigsäure, Benzoesäure, Fumarsäure, Bernsteinsäure, Schwefelsäure, Glukonsäure, Kohlensäure und Kombinationen davon, erzeugt wird.

8. Verfahren nach Anspruch 5, wobei die Säure ein Gemisch von Apfel-, Zitronen- und Phosphorsäure ist.

9. Verfahren zum Erhöhen der Löslichkeit von Molkeprotein in einer wässrigen Lösung, wobei das Verfahren Mischen von mindestens 0,5 % intaktem Molkeprotein mit einer Menge von Molkepeptiden, die wirksam ist, um die Gesamtmenge von in die wässrige Lösung aufgenommenem Protein auf mindestens 20 Prozent zu erhöhen, umfasst.

10. Verfahren nach Anspruch 9, weiter umfassend die folgenden Schritte
(a) Mischen von Wasser, Apfel- und Zitronensäure;
(b) Zugeben von Phosphorsäure, um eine wässrige Lösung zu bilden, die Apfelsäure, Zitronensäure und Phosphorsäure umfasst, und
(c) Mischen der Apfelsäure, Zitronensäure und Phosphorsäure umfassenden wässrigen Lösung mit der wässrigen Molkeproteinlösung.

## Revendications

1. Solution aqueuse comprenant au moins 20 pourcent de protéine de lactosérum, dans laquelle au moins 0,5 pourcent de la protéine de lactosérum est une protéine intacte.

2. Solution aqueuse selon la revendication 1 dans laquelle la protéine de lactosérum est une protéine intacte et/ou des peptides de lactosérum.

3. Solution aqueuse selon la revendication 1 ou la revendication 2 dans laquelle la protéine de lactosérum est choisie dans le groupe consistant en l'isolat de protéine de lactosérum, le concentré de protéine de lactosérum, l'hydrolysat de protéine de lactosérum, et des combinaisons de ceux-ci.

4. Solution aqueuse selon l'une quelconque des revendications précédentes dans laquelle ladite solution présente un pH de 2,0 à 4,0 et comprend un ou plusieurs acides sélectionnés dans le groupe consistant en l'acide phosphorique, l'acide citrique, l'acide tartrique, l'acide lactique, l'acide chlorhydrique, l'acide ascorbique, l'acide malique, l'acide acétique, l'acide benzoïque, l'acide fumarique, l'acide succinique, l'acide sulfurique, l'acide gluconique, l'acide carbonique, et des combinaisons de ceux-ci.

5. Procédé de formulation d'une solution aqueuse comprenant au moins 20% de protéine de lactosérum, dans lequel au moins 0,5 pourcent de la protéine de lactosérum est une protéine intacte, le procédé comprenant les étapes de
(a) combinaison de protéine intacte de lactosérum avec des peptides pour former un mélange protéine/peptide de lactosérum ;
(b) mélange du mélange protéine/peptide avec de l'eau pour former un mélange protéine/peptide/eau ; et
(c) addition au mélange protéine/peptide/eau d'une quantité d'acide efficace pour augmenter la solubilité du mélange protéine/peptide dans l'eau pour produire une solution protéine/peptide aqueuse.

6. Procédé selon la revendication 5 dans lequel la protéine de lactosérum est choisie dans le groupe consistant en l'isolat de protéine de lactosérum, le concentré de protéine de lactosérum, l'hydrolysat de protéine de lactosérum, et des combinaisons de ceux-ci.

7. Procédé selon la revendication 5 dans lequel ledit acide est produit par mélange d'acide phosphorique avec un ou plusieurs acides sélectionnés parmi l'acide citrique, l'acide malique, l'acide tartrique, l'acide lactique, l'acide chlorhydrique, l'acide ascorbique, l'acide acétique, l'acide benzoïque, l'acide fumarique, l'acide succinique, l'acide sulfurique, l'acide gluconique, l'acide carbonique et des combinaisons de ceux-ci.

8. Procédé selon la revendication 5 dans lequel l'acide est un mélange d'acide malique, citrique et phosphorique.

9. Procédé d'augmentation de la solubilité de la protéine de lactosérum dans une solution aqueuse, le procédé comprenant le mélange d'au moins 0,5% de protéine intacte de lactosérum avec une quantité de peptides de lactosérum efficace pour augmenter la quantité totale de protéine incorporée dans la solution aqueuse jusqu'à atteindre au moins 20 pourcent.

10. Procédé selon la revendication 9 comprenant en outre les étapes de
(a) mélange d'eau, d'acide malique et citrique ;
(b) addition d'acide phosphorique pour former une solution aqueuse comprenant de l'acide malique, de l'acide citrique, et de l'acide phosphorique, et
(c) mélange de la solution aqueuse comprenant de l'acide malique, de l'acide citrique, et de l'acide phosphorique avec la solution aqueuse de protéine de lactosérum.
